Europäisches Patentamt

European Patent Office

Office européen des brevets

(19)

(11) Veröffentlichungsnummer: **0 032 975**
**A2**

(12) **EUROPÄISCHE PATENTANMELDUNG**

(21) Anmeldenummer: **80106175.5**

(22) Anmeldetag: **10.10.80**

(51) Int. Cl.³: **B 23 C 3/14**
B 21 B 45/00, B 21 C 51/00
G 01 N 37/00

(30) Priorität: **28.01.80 DE 3002866**

(43) Veröffentlichungstag der Anmeldung:
**05.08.81 Patentblatt 81/31**

(84) Benannte Vertragsstaaten:
**AT BE CH DE FR GB IT LI LU NL SE**

(71) Anmelder: **TH. KIESERLING & ALBRECHT**
**Birkenweiher 66**
**D-5650 Solingen 1(DE)**

(72) Erfinder: **Goeke, Alfons**
**Burger Landstrasse 19**
**D-5650 Solingen(DE)**

(72) Erfinder: **Pauls, Kurt**
**Heinestrasse 5**
**D-4018 Langenfeld(DE)**

(54) Verfahren zur Beseitigung von Oberflächenfehlern an warmgewalzten, metallischen Profilen und langgestreckten Gusswerkstücken und Anlage zur Durchführung des Verfahrens.

(57) Es wird ein Verfahren zur Rißfreibearbeitung von wärmebehandeltem metallischem Stranggut gezeigt, bei dem die Fehler z.B. eines Walzknüppels einzeln erfaßt und abgespeichert werden und bei dem die Kenngrößen dieses Fehlers bei einer anschließenden Putzschälbearbeitung in Steuerungssignale für eine Putzschälmaschine umgesetzt werden. Weiterhin wird vorgeschlagen, die eigentliche Putzschälbearbeitung mit Hilfe eines Schneidverfahrens unter Verwendung definierter Schneiden, ohne nennenswerte Abnutzung der Schneidkanten, durchzuführen, im Gegensatz zu dem bisher gebräuchlichen Schleifen. Die Fehleraufnahme und Speicherung wird abgeschlossen, bevor die Beseitigung der Oberflächenfehler erfolgt.

Fig.1

EP 0 032 975 A2

COMPLETE DOCUMENT

TH. KIESERLING & ALBRECHT, SOLINGEN

---

- 6 -

Verfahren zur Beseitigung von Oberflächenfehlern an warmgewalzten, metallischen Profilen und langgestreckten Gußwerkstücken und Anlage zur Durchführung des Verfahrens.

Aus der DE-OS 2 904 483 ist ein Verfahren und eine Vorrichtung bekannt, mit dem in einer spitzenlosen Drehschälmaschine für runde Stangen und Draht Oberflächenfehler beseitigt werden können. Die Schälmaschine hat einen konzentrisch zur Werkstücklängsachse umlaufenden Messerkopf mit radial verstellbaren Schälmessern. Einlaufseitig vor dem Messerkopf ist eine Prüfsonde angeordnet, mit der Oberflächenfehler festgestellt werden. Das von den Fehlern ausgehende Signal wird verzögert und wenn die Fehlerstelle in den Bereich des Messerkopfes vorbewegt ist, werden die Messer radial auf das Werkstück zu angestellt. Durch Abnahme eines der Fehlerstellentiefe entsprechenden Spanes wird die Fehlerstelle am Werkstück beseitigt.

Nachteilig bei dieser Lösung ist, daß für die Beseitigung des Fehlers an einer Umfangsstelle die notwendige Spantiefe am gesamten Umfang abgehoben wird. Es entsteht so ein unnötiger Spanverlust und die Dickenabweichung des Werkstücks durch die Fehlerbeseitigung ist doppelt so groß, wie es eigentlich zur Beseitigung des Oberflächenfehlers notwendig wäre. Dies trifft jedenfalls für die üblicherweise nicht ringförmig um das Werkstück angeordneten Oberflächenfehler, das sind Walzrisse etc., zu. Zudem wird jedes Werkstück durch die Maschine geführt, unabhängig davon, ob es Fehler aufweist oder nicht .

- 7 -

- 7 -

Ein weit verbreitetes Verfahren bei der Bearbeitung von Brammen, Walzknüppeln etc. besteht darin, das ganze Werkstück zunächst zu prüfen, die Fehlerstellen zu markieren und schließlich mit Pendelschleifmaschinen die markierten Fehlerstellen zu beseitigen. Die Pendelschleifmaschinen werden von Hand geführt und gegen das Werkstück gedrückt. Die Schleifbearbeitung ist sehr laut und staubig und stellt körperliche Schwerstarbeit für den Bedienungsmann dar.

Hochdruckschleifmaschinen entlasten den Bedienungsmann zwar von der schweren körperlichen Arbeit, sie verursachen jedoch sehr viel Staub, die Schleifbearbeitung ist unverändert laut und in beiden Fällen bereitet die Rückgewinnung des zerspanten Materials einen großen, technischen Aufwand. Schließlich ist der Energieverbrauch beim Schleifen sehr hoch.

Der Erfindung liegt die Aufgabe zugrunde, in ökonomischer Weise die entstehende Umwelt- und Körperbelastung bei der Rißfreibearbeitung, sowie den Energie-Aufwand zu senken. Die vorgeschlagene Lösung dient der Humanisierung der Arbeitswelt.

Diese Aufgabe wird erfindungsgemäße durch die kennzeichnenden Merkmale von Anspruch 1 und 3 gelöst. Mit dem vorgeschlagenen Verfahren wird es auch möglich, die Leistung beim Putzschälen wesentlich zu steigern, weil ein schneidendes Arbeitsverfahren mit definierten Schneiden gegenüber dem Schleifen leistungsfähiger ist und eine wegabhängige Steuerung zuläßt.

TH. KIESERLING & ALBRECHT, SOLINGEN

---

- 8 -

Bei dem vorgeschlagenen Verfahren wird die Fehlerregistrierung abgeschlossen, bevor die Fehlerbeseitigung
beginnt.

Die Weiterbildung der Erfindung nach Anspruch 2 stellt
eine besonders maschinengerechte Lösung dar.

Die wesentlichen gegenständlichen Merkmale der Erfindung
sind im Anspruch 3 wiedergegeben. Wichtig dabei ist es,
daß bereits bei der Speicherung der Fehlerkenngrößen
die Fehler aussortiert werden, die nicht beseitigt werden
sollen, weil sie von untergeordneter Bedeutung sind.

Der scheibenförmige Messerkopf, der auch eine punktförmige
Bearbeitung des Werkstücks erlaubt, stellt eine wichtige
Voraussetzung für die Erzielung gratfreier Abschälungen
von Oberflächenfehlern dar. Die Beweglichkeit des Messerkopfes ist so gewählt, daß jede Umfangsstelle des Werkstücks bearbeitet werden kann. Die Verwendung von definierten
Schneiden vermeidet auch im Grunde der kalottenförmigen Abschälungen Bearbeitungsriefen mit steilen Böschungen. x)

Die kennzeichnenden Merkmale des Anspruchs 4 stellen eine
bevorzugte Ausbildung der erfindungsgemäßen Prüf- und
Putzschälmaschine dar. Die Beweglichkeit der Fehleraufnahmeeinrichtung entspricht der Beweglichkeit der Drehachse des
Messerkopfes. Mit zwei Punkten läßt sich bei einer festzulegenden Eintauchtiefe die Lage und Größe eines abzuschälenden
Oberflächenfleckens bestimmen. Diesem Umstand wird auch bei
der Ausbildung des Tastinstrumentes , das im einzelnen weiter

---

x)
   Bei mehreren Werkstücken wird die          - 9 -
   Lage der Oberfläche in der Nähe des
   Messerkopfes abgetastet.

- 9 -

unten beschrieben wird, Rechnung getragen.

Um scharfkantige Begrenzungen und Grate insbesondere an den Rändern der Oberflächenflecken zu vermeiden, ist die Ausgestaltung der Erfindung nach Anspruch 5 vorgesehen.

Ein weiteres Merkmal der Erfindung ist im Anspruch 6 wiedergegeben. Die Tast- und Spannköpfe dienen der Orientierung des Werkstücks um seine Längsachse, damit die gespeicherte Lage der Fehlerstellen mit der Lage der in die Putzschälmaschine eingespannten Fehlerstellen in Übereinstimmung gebracht werden kann. Gleichzeitig kann mit den Tast- und Spannköpfen die axiale Lage des Werkstücks in der Putzschälmaschine festgestellt werden.

Alternativ kann bei der Bearbeitung von Vierkantknüppeln eine Ausgestaltung gem. Anspruch 7 in Frage kommen, wenn die Drehorientierung und axiale Orientierung des Werkstücks in der Putzschälmaschine mit separaten Tastmitteln erfolgen. Die Drehorientierung ( um die Längsachse) bei Vierkantknüppeln kann von den Transporteinrichtungen an der Putzschälmaschine übernommen werden.

Die Weiterbildung der Erfindung gem. Anspruch 8 erlaubt eine kurze Bauweise der Schälmaschine, da die Stütz- und Spannmittel neben dem Messerkopf näher an die zu bearbeitende Querebene des Werkstücks herangerückt werden können.

Bei Vierkantstangen ist eine Drehorientierung vor dem Schälen entbehrlich, da die Vierkantstangen gegen Verdrehen gesichert transportiert und durch die Schälmaschine geführt werden können. Bei Rundmaterialien kann es vorteilhaft sein,

TH. KIESERLING & ALBRECHT, SOLINGEN

- 10 -

gem. Anspruch 9, einlaufseitig im Bereich der Schälmaschine eine Wendeeinrichtung für die Stangen vorzusehen,
damit die zur Drehorientierung des Werkstücks erforderlichen
Umfangsmarkierungen lagerichtig in die Tast- und Spannköpfe
eingesetzt werden können. Die Spann- und Tastköpfe können
einer Driftbewegung des Werkstücks in der Putzschälmaschine
folgen.

Die Erfindung wird im einzelnen anhand des gezeigten
Ausführungsbeispiels näher erläutert.

Dabei zeigen:

Fig. 1          eine Schemadarstellung für das
                vorgeschlagen Verfahren

Fig. 2          eine Aufteilung einer Fehlerstelle
                in mehrere abzutragende Oberflächenflecken

Fig. 3          die Schälmaschine im Längsschnitt

Fig. 4          einen Querschnitt durch Fig. 3
                nach Linie IV, IV.

— 11 —

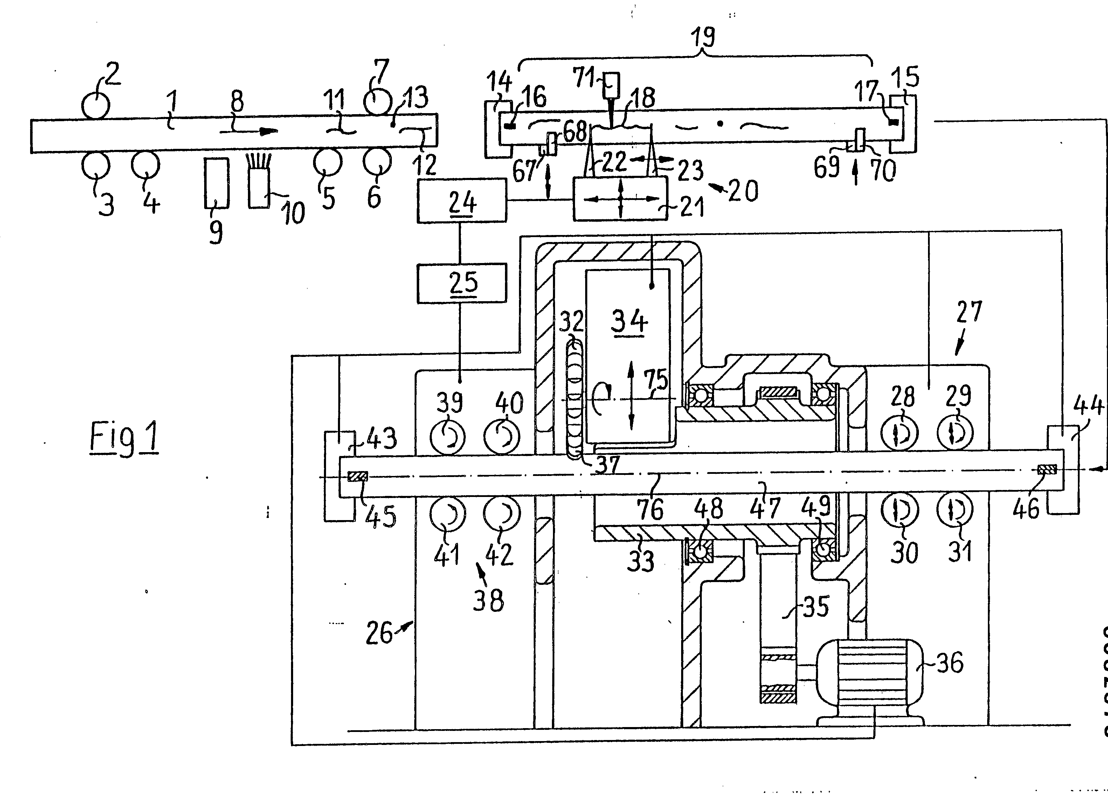

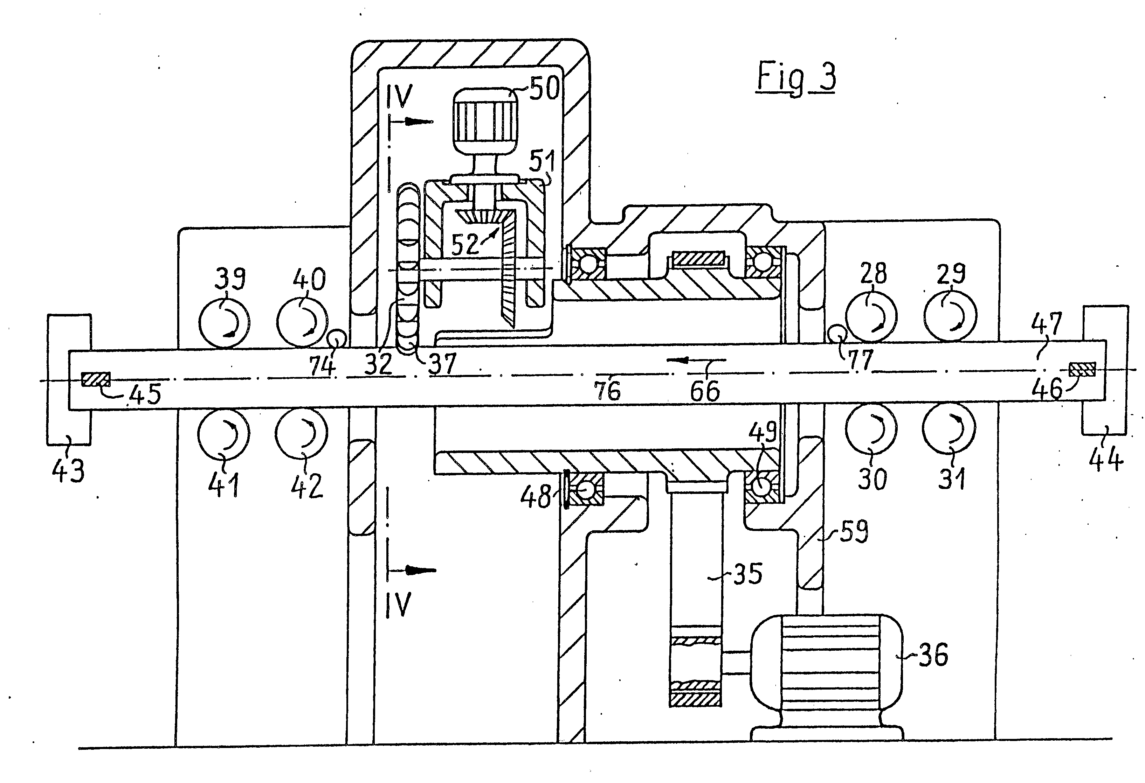

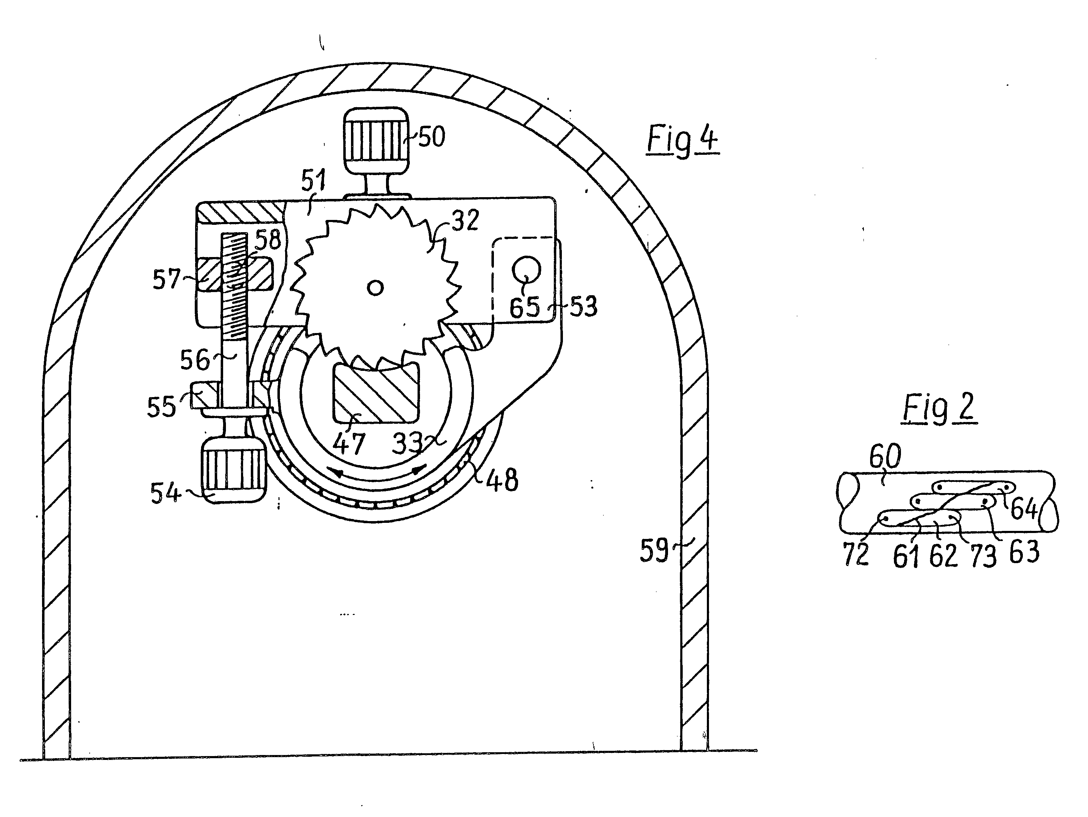

In Figur 1 ist der Verfahresablauf der Erfindung schematisch dargestellt. Der Walzknüppel 1 wird eingangs auf Walzrisse 11,12 und andere Oberflächenfehler 13 geprüft. Der Walzknüppel wird dabei auf Rollen 2 bis 7 geführt und an einer Prüfeinrichtung 9, sowie einer Markierungseinrichtung 10 in Richtung des Pfeiles 8 vorbeibewegt. Eine oder mehrere der Rollen 2 bis 7 können in nicht dargestellter Weise drehangetrieben sein. In der sich anschließenden Prüfstation 19 wird eine Lestandsaufnahme der markierten Fehler gemacht. Fehler werden von einer Fehleraufnahmeeinrichtung 20 einzeln erfaßt. Diese Einrichtung besteht aus einem Tastinstrument 21 mit Tastern 22, 23 sowie einem Speicher 24 und zwei Tast- und Spannköpfen 14,15. Die Tast- und Spannköpfe werden in einer bestimmten Drehlage, die durch die Umfangsmarkierungen 16, 17 bestimmt wird, auf die Endabschnitte des Werkstücks aufgesetzt. Die Umfangslage jedes zu speichernden Fehlers wird mit Hilfe dieser Tast- und Spannköpfe festgestellt. Die axiale Lage dieses Fehlers wird mit Hilfe des Tastinstrumentes 21 und dessen Länge durch den Abstand der Taster 22 und 23, die jeweils die Endpunkte eines Walzfehlers 18 erfassen, festgehalten. Gleichzeitig wird die Dicke der abzuschälenden Oberflächenschicht von einem Tiefenmeßgerät 71 ermittelt. Jedes Werkstück kann mit Hilfe von Taumelscheiben 67,68,69, 70 in der Prüfstation um seine Längsachse gedreht werden. Bei Vierkantknüppeln 47, wie sie z.B. in der Fig. 4 dargestellt sind, ist eine andere geeignete Wendevorrichtung auszuwählen. Sobald das Werkstück seine richtige Drehlage hat, und die Taster 22, 23 und das Tiefenmeßgerät die Abmaße eines Walzfehlers erfaßt haben, werden diese Kenngrößen des Walzfehlers 18 im Speicher 24 festgehalten.

Wie in Fig. 2 dargestellt, können bei dem gezeigten Werkstückabschnitt 60 ungewöhnlich gelagerte Oberflächenfehler 61 auch durch mehrere abzuschälende Ober-

- 12 -

flächenflecken 62, 63, 64 beseitigt werden. Die Taster 22, 23 werden dann jeweils an die Endpunkte 72, 73 der geplanten abzustellenden Oberflächenflecken gesetzt. Die Walzfehler werden dadurch je nach ihrer Größe in solche Teilflächen zerlegt, die den vom Schälwerkzeug abhebbaren Oberflächenflecken entsprechen.

Alternativ kann vorgesehen sein, daß die Endpunkte eines fehlers nacheinander abgetastet werden. Dann genügt ein Taster anstelle der gezeigten 2. Alle erwähnten Kenngrößen enes Oberflächenfehlers werden im Speicher 24 gesammelt. Bereits bei der Aufnahme der einzelnen Fehler findet eine Fehlerselektion statt, wobei solche Fehler, die aufgrund ihrer Größe oder Qualität unbedeutend sind, gar nicht erst erfaßt werden. Andererseits kann bereits vor der Fehleraufnahme in den Speicher 24 in der Prüfstation 19 eine Selektion ganzer Werkstücke stattfinden, entweder, weil zu viele Fehler an einem Werkstück sind und sich die Bearbeitung nicht lohnt, oder weil keine bedeutsamen Fehler an dem Werkstück ausgemacht werden können. In beiden Fällen werden diese Werkstücke nicht der Schälmaschine zugeführt, sondern auf nicht dargestellte herkömmliche Weise aus dem weiteren Arbeitsfluß herausgenommen. Die logische Entscheidung, ob ein Fehler bearbeitet werden soll oder ob ein ganzes Werkstück überhaupt bearbeitet werden soll, kann von einem Rechner 25 getroffen werden. Selbstverständlich können alle Entscheidungen von der Aufnahme der Fehler in den Speicher bis hin zu der Auswahl der Werkstücke auch vom Bedienungsmann getroffen werden. Wichtig ist die separate Beurteilung und ggf. Erfassung aller Kenngrößen jedes einzelnen Fehlers. Nach Abschluß der Fehlerbestandsaufnahme wird jedes für die Putzschälmaschine bestimmte

Werkstück ohne die Tast-und Spannköpfe 14,15 auf nicht gezeigte herkömmliche Weise der Schälmaschine 26 zugeführt. Im gezeichneten Beispiel schließt sich die Schälmaschine 26 unmittelbar an die Prüfstation 19 an. Die Taumelscheiben 67, 68, 69, 70 können somit für die Drehausrichtung des Walzknüppels in der Schälmaschine Verwendung finden.

Die vom Speicher 24 aufgenommenen und dem Rechner 25 zugeführten Fehlerkenndaten werden von diesem in Steuersignale für die Schälmaschine umgesetzt und an die Transportrollen 39 bis 42 des Einzugsapparates 38 bzw. die Rollen 28 bis 31 des Auszugsapparates 27, an den Schwenkmotor 36 und an die Steuerung im Getriebekasten 34 weitergeleitet.

Die Putzschälmaschine 26 besteht neben den Ein- und Auszugsapparaten 27, 38 aus einem Maschinengehäuse 59, in dem eine Hohlwelle 33 in Wälzlagern 48, 49 schwenkbar gelagert ist. Die Verschwenkung der Hohlwelle erfolgt über den Motor 36, der über einen Treibriemen 35 die Schwenklage des Messerkopfes bestimmt. Die axiale Lage der Hohlwelle bleibt unverändert. An der Hohlwelle ist stirnseitig ein Getriebekasten 34 mit einem davon abkragenden Messerkopf 32 befestigt. Die Drehachse des Messerkopfes ist außerhalb des Querschnitts des Walzknüppels 47 angeordnet. Die Messer 37 sind außen am Umfang des Messerkopfes verteilt. Die Messer 37 sind kreisrund. Die gesamte Hohlwelle 33 mit dem Getriebekasten 34 und dem Messerkopf 32 kann in jede beliebige Drehlage relativ zum Werkstück gebracht werden. Der Messerkopf 32 und sein Antrieb bestehend aus einem Motor 50, sowie einem Untersetzungsgetriebe 52 sind auf einer Schwinge 51 angeordnet, die gegenüber der Hohlwelle schwenkbar ist und ausschließlich von dieser getragen wird.

- 14 -

Wie Figur 5 zeigt, ist die Schwinge 51 auf der rechten Seite an einem Lagerarm 53 der von der Hohlwelle abkragt über ein Drehgelenkt 65 mit dieser verbunden, während auf der gegenüberliegenden Seite der Hohlwelle eine Kragplatte 55 vorgesehen ist, an der über eine Gewindespindel 56 und einen Verstellmotor 54 sowie ein bei 58 drehbares Muttergewindestück 57 eine Verstellmöglichkeit des Messerkopfes radial auf das Werkstück zu vorgesehen ist.
Die Drehachse 75 des Messerkopfes 32 ist parallel zur Längsachse 76 des Werkstücks 47 angeordnet.

Mit der Schälmaschine werden die Fehler entsprechend ihrer Erfassung vom Werkstück abgearbeitet. Das Werkstück wird dabei im wesentlichen in Richtung des Pfeiles 66 durch die Maschine bewegt. Bei einer Überlappung von Fehlern in Achsrichtung des Werkstücks gesehen kann eine hin- und hergehende Bewegung des Werkstücks während der Bearbeitung notwendig sein.

An mindestens einem aus der Putzschälmaschine herausragenden Ende des Walzknüppels 47 ist während der gesamten Bearbeitung von Rundmaterial einer der Tast- und Spannköpfe 43, 44 angeordnet, die abwechselnd auf das Werkstück aufgesteckt werden und nach den Umfangsmarkierungen 45, 46 ausgerichtet werden und dann und vor dem Passieren des zugehörigen Werkstückendabschnittes durch die Schälmaschine vom Werkstück abgenommen werden.

Insgesamt bietet die vorbeschriebene Behandlung und Bearbeitung der Walzknüppel 1 und 47 den Vorzug, daß schwere körperliche Arbeit durch Maschinenarbeit ersetzt werden kann. Weiterhin erweist es sich als vorteilhaft, daß die Arbeitsbedingungen durch ein anderes spangebendes Bearbeitungsverfahren in punkto Lärm und Staub verbessert werden. Zudem können durch die Schnittbearbeitung mit definierten verschleißarmen Schneiden die Zer-

TH. KIESERLING & ALBRECHT, SOLINGEN

- 15 -

spanungsleistung verbessert und der Energieverbrauch gesenkt werden, gegenüber dem bisher üblichen Schleifen. Es werden nicht nur die Zerspanungsleistung verbessert, vielmehr wird auch die Qualität des bearbeiteten Oberflächenfleckens verbessert. Bei einer Schnittbearbeitung, wie sie hier vorgeschlagen wird, ist es möglich, eine gratfreie Begrenzung des abgeschälten Oberflächenfleckens zu erzielen und die gesamte Schnittfläche so zu gestalten, daß Überlappungen beim Walzen vermieden werden.

Zur Erzielung einer genau vorbestimmten Eintauchtiefe des Messerkopfes kann die Steuerung desselben in nichtdargestellter Weise von in seiner unmittelbarer Nähe an- geordneten Tastern mitbestimmt werden.

TH. KIESERLING & ALBRECHT, SOLINGEN

- 2 -

Patentansprüche:

1.  Verfahren zum Putzschälen von warmgewalzten,
    metallischen Knüppel, Stangen und dergl., bei
    dem

    - die Werkstücke auf Walzfehler geprüft
      werden,
    - die Fehlerstellen markiert werden und
    - anhand der Fehler-Markierungen die
      Putzbearbeitung erfolgt
    dadurch gekennzeichnet, daß

    - die Fehlermarkierungen in Abhängigkeit
      von ihrer Bedeutung selektiert werden,
    - daß jeder bedeutsame Fehler nach Größe,
      Lage und Form abgetastet wird,
    - daß diese Fehlerkenngrößen in einem
      Speicher gesammelt werden,
    - daß anhand der Summe der bedeutsamen
      Fehler entschieden wird, ob eine Bearbeitung der Fehler wirtschaftlich oder
      sinnvoll ist
    - daß die gebündelten Fehlerkenngrößen
      eines Werkstücks in eine programmgesteuerte
      Putzschälmaschine eingegeben werden und
      die Fehlerstellen mit den gespeicherten
      Kennwerten auf einer von der Steuerung
      der Maschine vorgeschriebenen Bahn der
      Schneidwerkzeuge herausgeschnitten
      werden.

- 3 -

2. Putzschälverfahren nach Anspruch 1, dadurch gekennzeichnet, daß jeder Fehler, der an der Putzschälmaschine beseitigt werden soll, bei der Fehleraufnahme je nach Größe in solche Teilflächen zerlegt wird, die den vom Schälwerkzeug abhebbaren Oberflächenabschnitten entsprechen.

3. Prüf- und Putzschälanlage zur Durchführung des Verfahrens nach den Ansprüchen 1 und 2,

   - mit einer Prüfeinrichtung zum Feststellen von Walzfehlern,

   - mit einer Markierungseinrichtung zum Markieren aller Walzfehler

   - mit einer Prüfstation zur Selektion der zu bearbeitenden und nicht zu bearbeitenden Werkstücke

   - und mit einer Bearbeitungsmaschine zur Beseitigung der Walzfehler mit einem rotierenden scheibenförmigen Werkzeugträger

   gekennzeichnet durch,

   - eine Fehleraufnahme-Einrichtung (20), die die Kenngrößen der einzelnen zu beseitigenden Fehler (61) speichert und die die Fehler in bearbeitbare Flächen (62, 63, 64) einteilt,

   - einen umlaufenden Messerkopf (32) in der Putzschälmaschine (26), dessen Drehachse (35) außerhalb des Werkstückquerschnitts (47) angeordnet ist und der an seinem äußeren Umfang eine Vielzahl von Messern (37) trägt und in einer Querebene des Werkstücks (47) in jede Umfangslage zum Werkstück gebracht werden kann und durch

   - eine Steuereinrichtung (25) für den Messerkopf der Schälmaschine (26) mit der die Fehlerkenngrößen in die zugehörigen Messerkopfbewegungen und Lagen umgesetzt werden können.

4.   Prüf- und Putzschälanlage nach Anspruch 3,
     dadurch gekennzeichnet, daß die Fehleraufnahmeeinrichtung (20) aus einem in drei Richtungen
     beweglichen Tastinstrument (21) besteht, das nicht
     drehbar ist und sas mindestens einen Taster (22)
     aufweist, mit dem die Endpunkte eines Walzfehlers
     (18) bzw. die die Endpunkte ( 72, 73) eines abzunehmenden Oberflächenfleckens (62) abgegriffen
     und gleichzeitig die Tiefe von einem Rißtiefenmesser (71) erfaßt wird, und daß im Augenblick
     des Abgreifens alle Kenngrößen abgespeichert (24)
     werden.

5.   Putzschälmaschine nach Anspruch 3, dadurch gekennzeichnet, daß die Messer (37) des Messerkopfes in
     der Schälmaschine konvex gewölbte Schneiden aufweisen und vorzugsweise als kreisrunde Schneid-
     einsätze ausgebildet sind.

6.   Putzschälmaschine zur Bearbeitung von Rundmaterial
     nach einem oder mehreren der vorangegangen Ansprüche,
     dadurch gekennzeichnet, daß ein- und auslaufseitig
     des Messerkopfes (32) Tast- und Spannköpfe (43,44)
     für das Werkstück (47) vorgesehen sind, die in
     Richtung des Werkstückvorschubs beweglich und
     drehbar am Maschinengestell (59) gelagert sind.

7.   Putzschälmaschine für Vierkantknüppel nach  einem,
     oder mehreren der Ansprüche 3 bis 6, dadurch gekennzeichnet, daß beiderseits des Messerkopfes (32)
     der Schälmaschine (26) in Durchlaufrichtung des
     Werkstücks (47) gesehen, je eine Tastrolle (73,74)
     vorgesehen ist, mit deren Hilfe der unter dem Messer-
     kopf angeordnete Längsabschnitt des Werkstücks
     bestimmt wird.

- 5 -

8. Putzschälmaschine nach einem oder mehreren der vorangegangen Ansprüche, dadurch gekennzeichnet, daß die Drehachse (75) des Messerkopfes (32) parallel zur Längsachse (76) des Werkstücks (47) angeordnet ist.

9. Putzschälmaschine nach einem oder mehreren der vorangegangen Ansprüche mit Zu- und Abführeinrichtungen vor- und hinter der Schälmaschine, dadurch gekennzeichnet, daß im Bereich der Zuführeinrichtung der Schälmaschine eine zwischen den Zuführrollen angeordnete Wendevorrichtung, vorzugsweise Taumelscheiben ( 67, 68, 69, 70) heb- und senkbar angeordnet sind.

- 6 -

Fig 1

1/3

Fig 3

0032975

Fig 4

Fig 2